# EUROPEAN PATENT APPLICATION

(11) **EP 4 831 754 A1**
(43) Date of publication of application: **28.10.2026**
(21) Application number: 26171848.0
(22) Date of filing: 13.04.2026
(51) Int. Cl.: G05B 13/04, G05B 19/418, G06Q 10/0631, G06Q 10/067

(54) **SYSTEM AND METHOD TO DETERMINE CONTROL SYSTEM DIFFERENCES BETWEEN DISTINCT COMPARABLE ASSETS**

(30) Priority: 24.04.2025 IN 202511039482
(71) Applicant: Honeywell International Inc., Charlotte, NC 28202 (US)
(72) Inventor: AYYANNA, Raghuram Boya, Charlotte, 28202 (US); NAIK, Susanta Kumar, Charlotte, 28202 (US); KUMAR, Srikant, Charlotte, 28202 (US)
(74) Representative: Haseltine Lake Kempner LLP

(57) **Abstract**

A method and a system are provided for comparing and optimizing a plurality of different assets, units, or plants. The method includes collecting system data from the assets, units or plants into a comparison system, where the system data is enriched and processed. The method also includes identifying relationships between the assets, units or plants and generating graphs for each of the assets, units or plants, with each graph defining a vertex signature. The method also includes creating a compatibility matrix using the vertex signature of each graph, wherein the compatibility matrix provides similarity values for each of the plurality of assets.

## Description

### TECHNICAL FIELD

This disclosure is generally directed to system devices in a plant. More specifically, this disclosure is directed to a system and a method for finding and optimizing system configuration differences between distinct assets in a system.

### BACKGROUND

Corporate sites may include one or more industrial control systems or plants, each of which may have several different industrial systems (e.g., Distributed Control System, Supervisory Control and Data Acquisition, Programmable Logic Controller, safety systems, monitoring systems, applications for controlling various processes, etc.). As systems develop over time, these systems may be adapted piece-meal from different vendors or may have differing data formats for their proprietary procedures and engineering configurations. Furthermore, each piece of equipment will have complex programs that refer to different elements, such as input and output channels, Human-Machine Interface ("HMI") references, various pieces of hardware, and execution modules. As all of these elements are interconnected and interdependent upon each other, they must work in harmony and synchrony to ensure the safety, efficiency and reliability of the industrial operation. It is therefore pivotal for any corporate site to be able to identify and correct any differences or modifications between similar assets within or across plants, to maintain consistency or alignment as the equipment/unit/system has the same characteristics.

However, over the lifetime of these control systems, it is possible for variations to develop across assets at the same or different corporate sites. For example, there may be variations between similar assets; differences between operator training systems and the production plant that must be kept in sync; differences between digital twin of a specific production plant within the plant itself; differences between a best practice configuration and a current configuration of existing equipment; changes that occur between pre-Field Acceptance Test ("FAT") and post-FAT systems; and differences that result from pre-migration and post-migration systems.

Additionally, the scenarios listed above do not allow for finding the differences between two or more assets across the plants, because of the following factors: (1) assets have different names or system tags; (2) differences between assets are complex such that the asset may have a sub-asset or equipment which would have different name or system tag; (3) there is not a simple method to identify the differences in the configuration or like assets; (4) the assets and their related elements (i.e., controllers, input output modules, and system tags, etc.) are large in quantity, typically ranging in several hundreds to several thousands. At present, finding such differences is a tedious and labor-intensive task to search for and compare how two or more assets have configurations that differ each other. There is therefore a need to develop a system and a process for finding differences between different comparable assets, units, or plants and optimizing control system configuration differences between distinct assets in a control and instrumentation system.

Aspects of the present disclosure may solve one or more of the problems set forth above and/or other problems in the art. The scope of the current disclosure, however, is defined by the attached claims, and not by the ability to solve any specific problem.

### SUMMARY

This disclosure provides an apparatus and method to detect smart device configuration changes against a reference in process control systems.

One aspect of the present disclosure is directed to a method of optimizing characteristics of a plurality of assets controlled by a plurality of systems, the method comprising the steps of: collecting system data from each of the plurality of systems representing the plurality of assets into a comparison system; identifying relationships between the collected system data for the plurality of assets, wherein the collected data is recursively analyzed, by the comparison system, for each individual asset of the plurality of assets; generating a graph for each of the plurality of assets, wherein each graph is defined by the relationships of the plurality of assets and one or more subgraphs for each individual asset, wherein each graph defines a vertex signature for each of the plurality of assets; creating a compatibility matrix using the vertex signature for each of the plurality of assets, wherein the compatibility matrix provides values for vector similarities between the characteristics of each of the plurality of assets; and producing a comparison report from the compatibility matrix, wherein the comparison report visually indicates pairs of overlapping assets as determined by the values of the compatibility matrix.

Another aspect of the present disclosure is directed to a method of scoring system data for a plurality of assets controlled by a plurality of systems, the method comprising the steps of: collecting system data from each of the plurality of systems pertaining to the plurality of assets; enriching the collected system data to provide enriched system data including at least one of a description of an asset, an element type, and an asset naming convention; building a plurality of vertex signatures, wherein the plurality of vertex signatures are derived from relationships plotted from the enriched system data; concatenating the plurality of vertex signatures for the plurality of assets into a compatibility matrix; and scoring the compatibility matrix for the plurality of assets.

A further aspect of the present disclosure is directed to a method of optimizing system configurations between a plurality of assets controlled by a plurality of systems, the method comprising the steps of: collecting system data from the plurality of systems for the plurality of assets controlled by each system into a comparison system, wherein the collected system data includes at least one of a description of an asset, an element type, and an asset naming convention; identifying relationships between the collected system data for the plurality of assets to provide enriched system data; generating a graph for each of the plurality of assets from said enriched system data, wherein each graph defines a vertex signature; creating a compatibility matrix using the vertex signatures, wherein the compatibility matrix provides similarity values for each of the plurality of assets based on the enriched system data; and evaluating the compatibility matrix to determine validity of the similarity values of the compatibility matrix.

Other details, objects, and advantages of the system and method for finding and optimizing control system configuration differences between distinct assets in a control and instrumentation system will become apparent as the following description of certain exemplary embodiments thereof proceeds.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 illustrates an industrial comparison system for the control system data of various assets, units, or plants, according to the present disclosure.
FIG. 2 illustrates an example block diagram of a process of preparing and enriching the control system data for an individual system.
FIG. 3 illustrates an example block diagram of a process of comparing control system data for multiple systems.
FIG. 4 illustrates an example block diagram of an interactive user interface for the comparison system.
FIG. 5 illustrates an example comparison report of the control system data of two individual assets.
FIG. 6 illustrates another example of a comparison report of the control system data of multiple assets.

### DEFINITIONS

Both the foregoing general description and the following detailed description are exemplary and explanatory only and are not restrictive of the features, as claimed. It may be advantageous to set forth definitions of certain words and phrases used throughout this patent document. As used herein, the terms "comprises," "comprising," "has," "having, "includes," "including," or other variations thereof, are intended to cover a non-exclusive inclusion such that a process, a method, an article, or an apparatus that comprises a list of elements does not include only those elements but may include other elements not expressly listed or inherent to such a process, a method, an article, or an apparatus. In this disclosure, unless stated otherwise, relative terms, such as, for example, "about," "substantially," and "approximately" are used to indicate a possible variation of ±10% of the stated value.

As used herein, the terms "application" and "program" refer to one or more computer programs, software components, sets of instructions, procedures, functions, objects, classes, instances, related data, or a portion thereof adapted for implementation in a suitable computer code (including source code, object code, or executable code).

As used herein, the phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like.

As used herein, the phrase "at least one of," when used with a list of items, means that different combinations of one or more of the listed items may be used, and only one item in the list may be needed. For example, "at least one of: A, B, and C" includes any of the following combinations: A; B; C; A and B; A and C; B and C; and A and B and C.

As used herein, the phrase "Distributed Control System" ("DCS") refers to a computerized control system used in industrial processes to manage and automate complex operations by distributing control functions across multiple, interconnected systems, rather than relying on a single centralized controller.

As used herein, the phrase "Field Acceptance Test" ("FAT") refers to a series of tests performed by a vendor after installing and optimizing a system to ensure the system meets the customer's requirements in a real-world environment, including functional and coverage tests.

As used herein, the phrase "gigabyte" ("GB") refers to a unit of information equal to one billion bytes.

As used herein, the phrase "Human-Machine Interface" ("HMI") refers to a user interface that allows humans to interact with and control machines, systems, or devices, in industrial settings, enabling monitoring, control, and process execution.

As used herein, the phrase "Key Performance Indicator" ("KPI") refers to a quantifiable measure used to evaluate the success of an organization, employee, etc. in meeting objectives for performance.

As used herein, the phrase "Programmable Logic Controller" ("PLC") refers to an industrial-grade digital computer designed to perform control functions in industrial applications. PLCs may be capable of running machine procedures, programs, and applications without interruption on an indefinite basis.

As used herein, the phrase "Purdue model of process control" ("Purdue model") refers to a framework for segmenting and securing industrial control systems (ICS) networks, organizing them into distinct levels or zones to protect operational technology (OT) from cyberattacks and ensure reliable operations.

As used herein, the phrase "Supervisory Control and Data Acquisition" ("SCADA") refers to a system architecture that enables industrial organizations to manage, monitor, and control processes, machines, and plants. SCADA systems may utilize computers, networks, and graphical human-machine interfaces (HMIs) to provide high-level control, management, and supervision of industrial processes.

### DETAILED DESCRIPTION OF THE DISCLOSURE

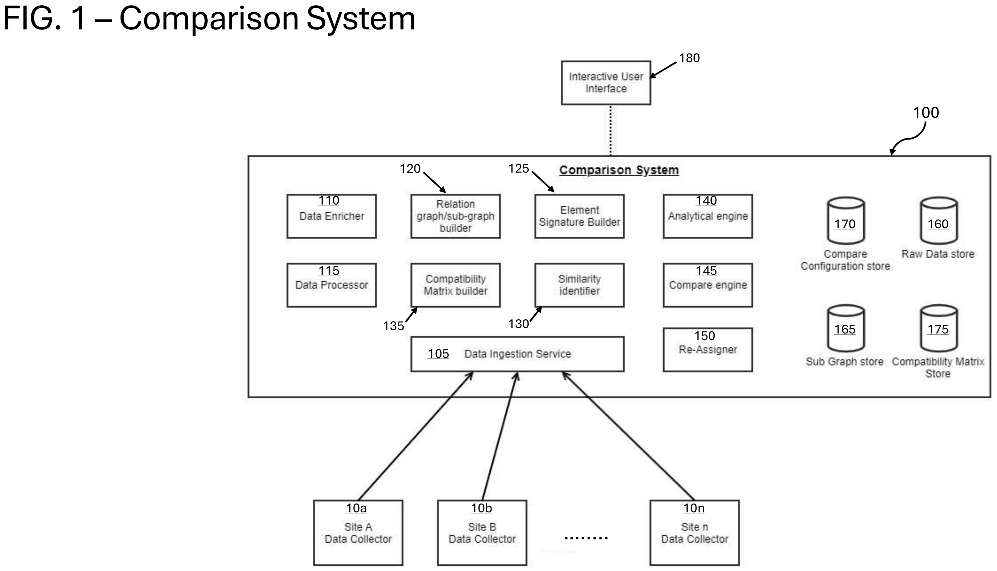

FIGS. 1 through 4, discussed below, and the various examples used to describe the principles of the present invention in this patent document are by way of illustration only and should not be construed in any way to limit the scope of the invention. Those skilled in the art will understand that the principles of the present invention may be implemented in any suitable manner and in any type of suitably arranged device or system.

In FIG. 1, the comparison system 100 may be implemented using a Purdue model of process control. In the Purdue model, "Level 0" is considered to be a foundational layer, which may include physical equipment with one or more sensors and one or more actuators (collectively "the physical equipment"). The sensors and actuators represent components in a process system that may perform any of a wide variety of functions. For example, the sensors could measure a wide variety of characteristics in the process system, such as temperature, pressure, or flow rate. Also, the actuators could alter a wide variety of characteristics in the process system. Together, the physical equipment could represent additional components in any suitable process system with sensors suitable for measuring one or more characteristics in a process system and various other mechanisms for operating on or affecting one or more conditions in a process system. It should be noted that the physical equipment may be controlled by PLCs and RTUs, SCADA and DCS systems, MES and ERP systems, and IT and OT systems.

At least one network may be coupled to the physical equipment in order to facilitate interaction within the system. For example, the network could transport measurement data from the sensors and provide control signals to the various actuators or mechanisms. The network may further represent any suitable network or combination of networks. As particular examples, the network could represent an Ethernet network, an electrical signal network (such as a HART or FOUNDATION FIELDBUS network), a pneumatic control signal network, or any other or additional type(s) of network(s).

In the Purdue model, "Level 1" may include one or more controllers ("Level 1 controllers"), which are coupled to the network. Among other things, each Level 1 controller may use the measurements from one or more sensors to control the operation of the physical equipment. For example, a Level 1 controller could receive measurement data from one or more sensors and use the measurement data to generate control signals for various mechanisms in the process system. Each Level 1 controller may include any suitable structure for interacting with and controlling the physical equipment. Each Level 1 controller could, for example, represent a programmable logic controller (PLC) that is capable of multivariable controlling of a process system, such as a, Robust Multivariable Predictive Control Technology (RMPCT) controller, or other type of controller implementing model predictive control (MPC) or other advanced predictive control (APC). As a particular example, each controller could represent a computing device running a real-time operating system.

In one or more example embodiments of this disclosure, the physical equipment can be smart devices that include different parameter values. Parameter values can be settings and configurations for said smart device to perform specific functions in an active mode of the process system. For example, Lower Range Value (LRV) and Upper Range Value (URV) can be configuration parameters while Primary value (PV) can be a non-configuration parameter. Each smart device can have different values for different modes. The different modes can be set based on product, version of the product being manufactured, or a service being executed.

In an embodiment, multiple networks may be coupled to the Level 1 controllers. The networks may facilitate interaction with the Level 1 controllers, such as by transporting data to and from the Level 1 controllers. The networks could represent any suitable networks or combination of networks. As particular examples, the networks could represent a pair of Ethernet networks or a redundant pair of Ethernet networks, such as a FAULT TOLERANT ETHERNET (FTE) network from HONEYWELL INTERNATIONAL INC.

In the Purdue model, "Level 2" may include one or more machine-level controllers coupled to the networks. The machine-level controllers perform various functions to support the operation and control of the various controllers, sensors, and mechanisms that may be associated with a particular piece of industrial equipment (such as a boiler or other machine). For example, the machine-level controllers could log information collected or generated by the controllers, such as measurement data or control signals from the physical. The machine-level controllers could also execute applications that control the operation of the controllers, thereby controlling the operation of the physical equipment. In addition, the machine-level controllers could provide secure access to the Level 1 controllers. Each of the machine-level controllers includes any suitable structure for providing access to, control of, or operations related to a machine or other individual piece of equipment. Additionally, different machine-level controllers could be used to control different pieces of equipment in a process system.

In the Purdue model, "Level 3" may include one or more unit-level controllers coupled to additional networks and is typically associated with a unit in a process system, which represents a collection of different machines operating together to implement at least part of a process. The unit-level controllers perform various functions to support the operation and control of components in the lower levels. For example, the unit-level controllers could log information collected or generated by the components in the lower levels, execute applications that control the components in the lower levels, and provide secure access to the components in the lower levels. Each of the unit-level controllers includes any suitable structure for providing access to, control of, or operations related to one or more machines or other pieces of equipment in a process unit. Furthermore, different unit-level controllers could be used to control different units in a process system.

Access to the unit-level controllers may be provided by one or more operator stations. Each of the operator stations includes any suitable structure for supporting user access and control of one or more components in the process system.

In the Purdue model, "Level 4" may include one or more plant-level controllers coupled to a series of networks and are typically associated with one of the process sites, which may include one or more process units that implement the same, similar, or different processes. The plant-level controllers perform various functions to support the operation and control of components in the lower levels. As particular examples, the plant-level controller could execute one or more manufacturing execution system applications, scheduling applications, or other or additional plant or process control applications. Each of the plant-level controllers may also include any suitable structure for providing access to, control of, or operations related to one or more process units in a process plant. Access to the plant-level controllers may be provided by one or more operator stations that include any suitable structure for supporting user access and control of one or more components in the process system.

In the Purdue model, "Level 5" may include one or more enterprise-level controllers coupled to various networks. Each enterprise-level controller is typically able to perform planning operations for and to control various aspects of multiple plants. The enterprise-level controllers may also perform various functions to support the operation and control of components in the plants. As particular examples, the enterprise-level controller could execute one or more order processing applications, enterprise resource planning (ERP) applications, advanced planning and scheduling (APS) applications, or any other or additional enterprise control applications. Each of the enterprise-level controllers may include any suitable structure for providing access to, control of, or operations related to the control of one or more plants. In this document, the term "enterprise" refers to an organization having one or more plants or other processing facilities or sites to be managed. Note that if a single plant is to be managed, the functionality of the enterprise-level controller could be incorporated into the plant-level controller (Level 4). Access to the enterprise-level controllers may be provided by one or more operator stations. Each of the operator stations includes any suitable structure for supporting user access and control of one or more components in the process system.

Various levels of the Purdue model can include other components, such as one or more databases. The database(s) associated with each level could store any suitable information associated with that level or one or more other levels of the process system.

FIG. 1 illustrates an exemplary embodiment of an industrial comparison system or mechanism 100. The comparison system 100 collects system data from a plurality of comparable assets, units, or plants, each of which are managed by their own various systems (e.g., DCS, SCADA, PLCs, safety systems, monitoring systems, applications for controlling various processes, etc.), and identifies the differences present amongst the plurality of assets. The comparison system 100, as shown in FIG. 1, may include various components that collect, enrich, process, and store the system data, as well as various modules and engines that recursively analyze relationships and similarities in the plurality of assets. It should be noted that each of the plurality of assets, units, or plants may include at least one data collector 10a-10n and that each of the plurality of assets may represent one or more processing sites (or one or more portions thereof). In general, each of the assets 10a-10n may implement one or more processes and can individually or collectively be referred to as a process site with a data collector. A process site generally represents any system or portion thereof configured to process one or more products or other materials in some manner. Additionally, the various systems discussed herein may include, but are not limited to, automation systems, building or facility systems, industrial systems, flight control systems, or other comparable systems.

As shown in FIG. 1, data collectors from various assets 10a-10n may provide a collection of systems data from the asset to the comparison system 100 via a network connection. The system data collected by the data collectors 10a-10n may include, but is not limited to, information representative of the plurality of assets or related to the system configuration (i.e., programs, hardware, network information, interconnections, safety data, HMI information, etc.), the type of asset or element, a description of the asset, the naming convention within the system, the engineering configuration, the Purdue model level or traversal depth n, and other similar types of manufacturing information. The comparison system 100 receives the system data via a data ingestion service 105, which saves and stores the raw data in a raw data store 160. Once the raw data has been ingested, the data is transferred from the data ingestion service 105 to a data enricher service 110, which sifts through the data to determine various relationships between each of the different assets and entities. Additionally, the data enrichment service 110 may provide additional context to the raw data through recursive analysis. The enriched system data is then processed by a data processor service 115, which prepares the enriched data for the comparison service.

Once the initial data enrichment and processing has occurred, the enriched system data is then submitted to a compare configuration store 170 and to a graph/subgraph builder 120 (shown in FIG. 1). The compare configuration store 170 stores the matching asset information for each asset that is being compared from the chosen assets or systems. The graph builder 120 reviews each of the assets in the enriched system data and determines various relationships between elements. The graph builder 120 further traverses through all of these established relationships for each of the plurality of assets recursively and develops or generates a graph, with possible subgraphs, for each of the related assets. These graphs, which are plotted from the relationships established in the enriched system data, are then transferred from the graph builder 120 to an element signature builder 125. Based on the graphs and subgraphs generated, the element signature builder 125 creates a unique vertex signature VS1[M] for each asset by leveraging the asset and its unique features from the enriched system data. The element signature builder 125 further calculates a signature for any potential subgraphs and appends the subgraph signature to the asset signature FVS1[M] for further comparison analysis. Stated another way, using the element signature builder 125, each graph and subgraph defines a unique vertex signature. The element signature builder 125 will cyclically repeat this process for each of the graphs of related assets, thereby producing a distinct signature for each asset for the comparison system 100.

The unique signatures for the assets are then transferred from the element signature builder 125 to a sub graph store 165, which stores both the signatures and sub graphs for each asset that is being compared, and to a similarity identifier 130. In the similarity identifier 130 (shown in FIG. 1), a compare engine 145 is used to identify differences across the systems or assets. The compare engine 145 provides the similarity identifier 130 with a further analysis by determining the engineering configurations of the assets and whether changes have been implemented into the systems. Once the similarity identifier 130 has received feedback from the compare engine 145, the similarity identifier 130 will compare the two asset signatures against one another and assign a similarity value or score, which specifies how similar the two assets are. When preparing a similarity score, the similarity identifier 130 will provide a similarity value or score of 0 in instances where a comparison of the asset signatures determines that the enriched system data of each asset contains a dissimilar data set. Alternatively, the similarity identifier 130 will provide a non-zero similarity value or score in instances where a comparison of the assets determines that the enriched system data for each asset shares a similar data set. It should be noted that similarity values range from 0 to 1, where a similarity value of 1 means that the assets that are being compared are the exact same.

Once the similarity scores have been generated by the similarity identifier 130, the similarity scores for the assets that are being compared against each other are transferred to a compatibility matrix builder 135 and to a compatibility matrix store 175. The compatibility matrix store 175 retains the similarity score information for each asset from the chosen system. The matrix builder 135, shown in FIG. 1, creates and maintains a compatibility matrix MxN for the different assets or systems, based on the similarity scores generates using the vertex signatures of each graph. The compatibility matrix MxN may be a table that includes the similarity scores, produced by the similarity identifier 130, of the various assets and systems based on their enriched system data, which may include data relating to the various combinations of a given system or the asset engineering configurations. In the compatibility matrix MxN, cells for incompatible assets, based on the signatures and graphs/subgraphs, will receive a value of 0 and cells with compatible assets will receive their associated non-zero similarity value.

After the compatibility matrix MxN has been generated by the compatibility matrix builder 135, the matrix MxN is prepared for comparison by a user in the form of a comparison report. Assets within the matrix MxN are reviewed by a re-assigner or selection mechanism 150, which assigns an asset that the user has selected and gives it the highest similarity score. Other assets that are not selected by the user would be automatically given new assignments by the re-assigner 150 based on an override by the user.

Additionally, the comparison system 100 includes an analytical engine 140, which may be used to track and analyze the system data and the compatibility matrix MxN to develop trends, provide statistics, determine various insights and counts relating to the assets, units, or plants, and compare data against relevant KPIs.

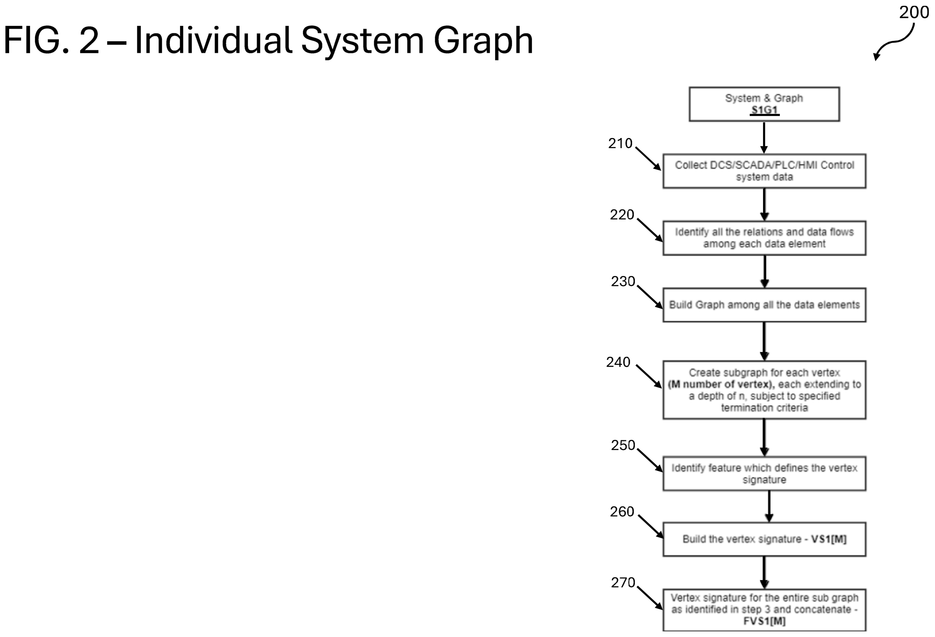

FIG. 2 illustrates a block diagram of a method 200 for preparing an individual asset or system using the comparison system 100. As shown in FIG. 2, an asset or system S1G1 is selected for comparison and, in step 210, a data collector 10a (FIG. 1) collects the system data, including DCS, SCADA, PLC, OT and IT systems, and HMI control data, for data ingestion. The system data is enriched and processed in step 220, where the data processing service 115 (FIG. 1) identifies all of the relationships and data flows from among each data element.

In step 230, the graph builder 120 (FIG. 1) builds graphs for each of the data elements for each asset. As noted above, the graphs may include additional subgraphs, which are also generated by the graph builder 120 as a part of step 240. Step 240 also includes creating a subgraph for each vertex (M is the number of the vertex), with each vertex extending to a level or traversal depth *n.* It should be noted that the level depth n and subgraphs are subject to a specified termination criteria as determined by the user. For example, step 240 may be repeated in a cyclic manner for each asset as needed until the maximum level depth *nₘₐₓ* is reached. Additionally, the level depth *n* of each graph may be pre-determined either by a user or by the maximum level depth *nₘₐₓ.*

Step 250 includes identifying unique features that define the asset through the use of the element signature builder 125. As a part of step 250, the element signature builder 125 may analyze certain aspects of the system data, including, but not limited to, the element type of the asset, the description of the asset, unit, or plant, and the naming convention of each asset. Once the analysis has been rendered, step 260 involves the element signature builder 125 generates the vertex signature VS1[M].

In step 270, the vertex signatures of any potential sub graphs that have been generated by the graph builder 120 are analyzed and concatenated with the graph vertex signature VS1[M] to create a unique signature FVS[M] for the asset or system S1G1.

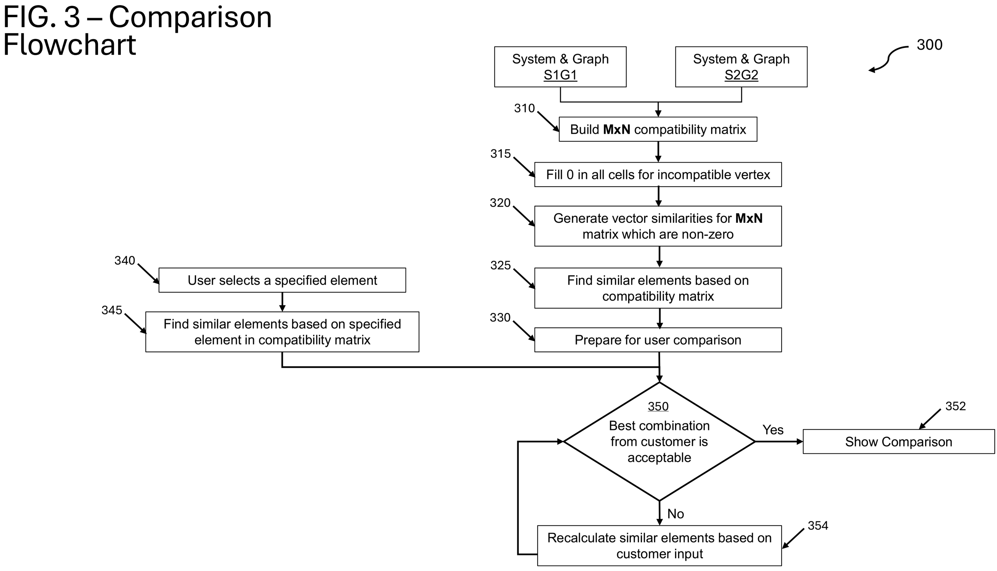

FIG. 3 illustrates another block diagram of a method 300 of comparing different assets S1G1 and S2G2. In step 310, the compatibility matrix builder 135 generates a compatibility matrix MxN based on the unique signatures of the assets S1G1 and S2G2 and data obtained from the similarity identifier 130. More specifically, the compatibility matrix builder 135 incorporates both the unique signature FVS[M] of S1G1 and the unique signature FVS[N] created for S2G2 into the compatibility matrix MxN. In steps 315 and 320, the similarity identifier 130 reviews the various signatures and scores or provides the appropriate similarity score for the assets based on their enriched system data. In step 315, assets that generate an incompatible vertex will be filled with a value of 0 in the compatibility matrix MxN. In step 320, the similarity identifier 130 will generate vector similarity scores with non-zero values for the computability matrix MxN, in which the system data indicates vector similarities.

Step 325 involves the re-assigner or selection mechanism 150 analyzing the compatibility matrix MxN for similar elements. Specifically, the re-assigner 150 assigns a pair of overlapping assets that the user has selected and gives it the highest similarity score. In step 330, the re-assigner 150 completes this analysis and selection, thereby preparing the matrix MxN for comparison by the user.

In step 340, the user is able to utilize an HMI to review the system data and select a specific element or asset for review. The user, in step 345, is able to review the compatibility matrix MxN for similar elements, based on the pre-selected element or asset in the aforementioned step.

In step 350, the user evaluates whether the element selected by the re-assigner or selection mechanism 150 from the compatibility matrix MxN is the best combination that is acceptable to the customer. Stated another way, the user is able to review comparison reports 500, 600 to determine the validity of the comparison system 100, based on the similarity scores generated in the compatibility matrix MxN. As shown in step 350, if the user determines the comparison generated in the compatibility matrix is valid (Yes), then a comparison report showing the comparison of assets, units, or plants is issued. However, if the user determines that the comparison is invalid (No), the comparison system recalculates the similar assets based on updated customer input and step 350 is repeated.

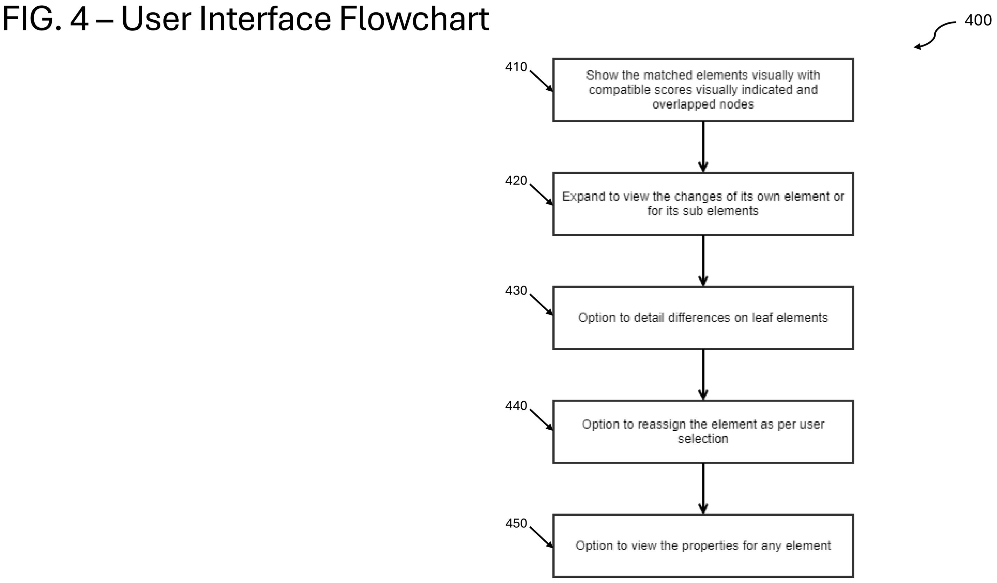

FIG. 1 also includes an interactive user interface 180. FIG. 4 provides additional details for the user interface 180, specifically with a method 400 of using the interface to select various assets or elements for comparison in conjunction with steps 340, 345, and 350 of the previous method 300. In step 410, the user interface 180 presents the user with a list of matched assets or elements, with the matched assets having similarity scores visually indicated and with the corresponding overlapped nodes. In step 420, the user is able to expand the view of the changes to the various assets or elements, allowing the user to view the various sub-assets or subelements in the user interface 180.

In step 430, the user is provided with the option to review, via the user interface 180, detail differences on various assets or elements. In step 440, the user is also provided the option to reassign assets or elements as selected by the user with the user interface 180. In step 450, the user is further provided with the option of viewing, via the user interface 180, the properties and characteristics of any asset or element provided to the comparison system 100.

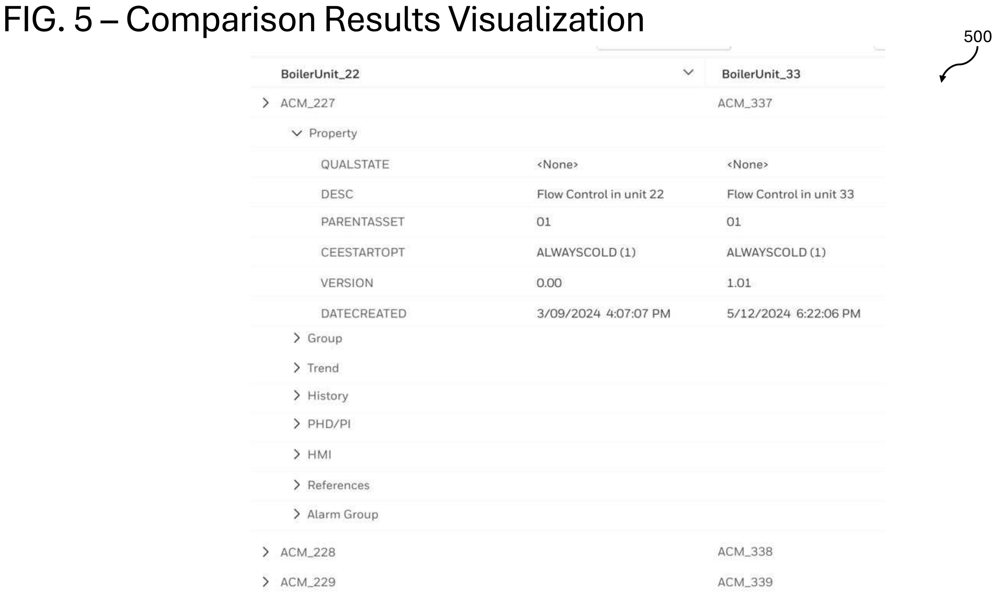

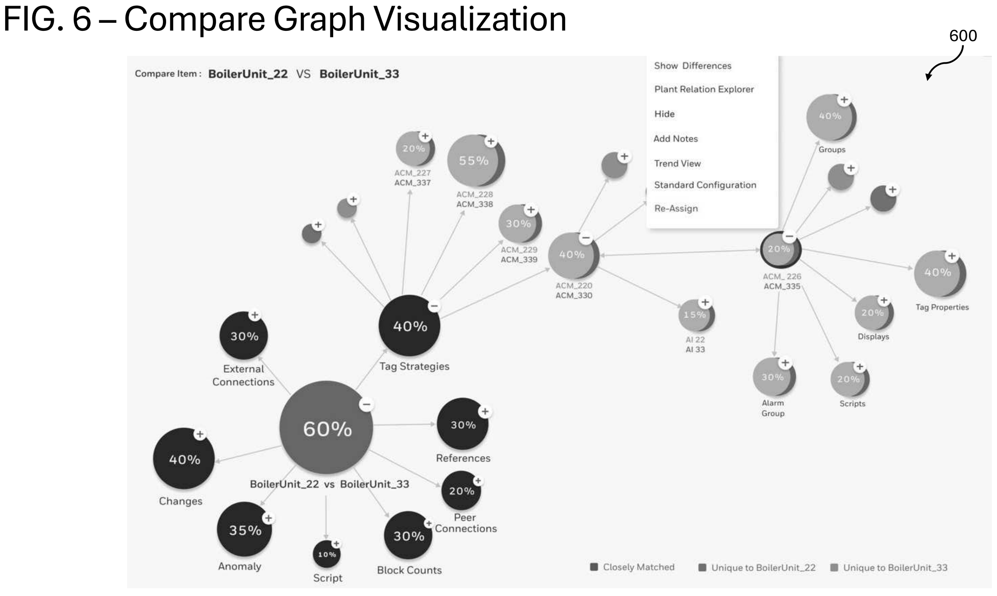

FIGs. 5 and 6 each illustrate comparison reports 500, 600 in which the system data for a user-selected asset, unit, or plant is compared. In FIG. 5, the system data is shown for each asset, with the asset description, asset type, and engineering configuration being compared side by side for the user to evaluate. Additionally, the report 500 of FIG. 5 provides other pertinent information, such as the configuration version and the date each asset was digitally created.

An alternative comparison report 600, as shown in FIG. 6, includes a cluster diagram for the comparison of each asset, unit, or plant that visualizes the similarities of each asset in a geographic manner. As shown in FIG. 6, such a report 600 may take the system data and determine a similarity percentage which may further analyzed into distinct data components. For example, FIG. 6 depicts a comparison report 600 for two boiler assets ("BoilerUnit_22" and "BoilerUnit_33") which provides further analysis of the system data for "Tag Strategies" that indicate the similarities and differences for each asset. The comparison report 600 may provide various nodes for the review of various characteristics, properties, and details for each asset, unit, or plant as provided to the comparison system 100.

While this disclosure has described certain embodiments and generally associated methods, alterations and permutations of these embodiments and methods will be apparent to those skilled in the art. Accordingly, the above description of example embodiments does not define or constrain this disclosure. It is contemplated that a particular feature described above, either individually or as part of an embodiment, may be combined with other individually described features or parts of other embodiments to provide further embodiments. Thus, while certain exemplary embodiments of the process, apparatus, system, and methods of using the same have been shown and described above, it is to be distinctly understood that the invention is not limited thereto but may be otherwise variously embodied and practiced within the scope of the following claims. Other changes, substitutions, and alterations are also possible without departing from the spirit and scope of this disclosure, as defined by the following claims.

### SPECIFIC EMBODIMENTS

While the following is described in conjunction with specific embodiments, it will be understood that this description is intended to illustrate and not limit the scope of the proceeding description and the appended claims.

A first embodiment of the disclosure is a method of optimizing characteristics of a plurality of assets controlled by a plurality of systems, the method comprising the steps of: collecting system data from each of the plurality of systems representing the plurality of assets into a comparison system; identifying relationships between the collected system data for the plurality of assets, wherein the collected data is recursively analyzed, by the comparison system, for each individual asset of the plurality of assets; generating a graph for each of the plurality of assets, wherein each graph is defined by the relationships of the plurality of assets and one or more subgraphs for each individual asset, wherein each graph defines a vertex signature for each of the plurality of assets; creating a compatibility matrix using the vertex signature for each of the plurality of assets, wherein the compatibility matrix provides values for vector similarities between the characteristics of each of the plurality of assets; and producing a comparison report from the compatibility matrix, wherein the comparison report visually indicates pairs of overlapping assets as determined by the values of the compatibility matrix. An embodiment of the disclosure is one, any or all of prior embodiments in this paragraph up through the first embodiment in this paragraph, wherein the values calculated by a similarity identifier are based on the collected system data, with the collected system data being representative of an asset characteristic including at least one of a description of an asset, an element type, and an asset naming convention. An embodiment of the disclosure is one, any or all of prior embodiments in this paragraph up through the first embodiment in this paragraph, wherein the values for vector similarities, calculated by the similarity identifier, range from 0 to 1. An embodiment of the disclosure is one, any or all of prior embodiments in this paragraph up through the first embodiment in this paragraph, wherein the similarity identifier generates a value of 0 for a comparison of assets in which the collected system data contains a dissimilar data set. An embodiment of the disclosure is one, any or all of prior embodiments in this paragraph up through the first embodiment in this paragraph, wherein the similarity identifier generates a non-zero value for a comparison of assets in which the collected system data indicates vector similarities. An embodiment of the disclosure is one, any or all of prior embodiments in this paragraph up through the first embodiment in this paragraph, the method also comprising a step of evaluating the comparison report, wherein a user selects a specific pair of overlapping assets to determine validity of the values for vector similarities used in the compatibility matrix. An embodiment of the disclosure is one, any or all of prior embodiments in this paragraph up through the first embodiment in this paragraph, wherein a selection mechanism in the comparison system provides the user with the specific pair of overlapping assets, wherein the selection mechanism is configured to provide a highest similarity value as calculated by the compare engine. An embodiment of the disclosure is one, any or all of prior embodiments in this paragraph up through the first embodiment in this paragraph, wherein a traversal depth n of each graph is either pre-determined by a user or by a highest possible number of traversals. An embodiment of the disclosure is one, any or all of prior embodiments in this paragraph up through the first embodiment in this paragraph, wherein the plurality of assets include physical equipment, controlled by PLCs and RTUs, SCADA and DCS systems, MES and ERP systems, and IT and OT systems. An embodiment of the disclosure is one, any or all of prior embodiments in this paragraph up through the first embodiment in this paragraph, wherein the system data collected by a data ingestion service is stored in a raw data store within a data collector.

A second embodiment of the disclosure is a method of scoring system data for a plurality of assets controlled by a plurality of systems, the method comprising the steps of: collecting system data from each of the plurality of systems pertaining to the plurality of assets; enriching the collected system data to provide enriched system data including at least one of a description of an asset, an element type, and an asset naming convention; building a plurality of vertex signatures, wherein the plurality of vertex signatures are derived from relationships plotted from the enriched system data; concatenating the plurality of vertex signatures for the plurality of assets into a compatibility matrix; and scoring the compatibility matrix for the plurality of assets. An embodiment of the disclosure is one, any or all of prior embodiments in this paragraph up through the second embodiment in this paragraph, wherein a similarity identifier generates a plurality of similarity values based on the enriched system data, with the similarity values ranging from 0 to 1. An embodiment of the disclosure is one, any or all of prior embodiments in this paragraph up through the second embodiment in this paragraph, wherein the similarity identifier generates a similarity value of 0 for a comparison of assets where the enriched system data contains a dissimilar data set, and wherein the similarity identifier generates a non-zero similarity value for a comparison of assets where the enriched system data indicates vector similarities. An embodiment of the disclosure is one, any or all of prior embodiments in this paragraph up through the second embodiment in this paragraph, the method further comprising a step of evaluating the compatibility matrix, wherein a user selects a specific pair of overlapping assets from the compatibility matrix to determine validity of the similarity values. An embodiment of the disclosure is one, any or all of prior embodiments in this paragraph up through the second embodiment in this paragraph, wherein the selection of the specific pair of overlapping assets by the user is selected via a selection mechanism configured to provide a highest similarity value as calculated by the similarity identifier. An embodiment of the disclosure is one, any or all of prior embodiments in this paragraph up through the second embodiment in this paragraph, wherein the plurality of assets include physical equipment controlled by PLCs and RTUs, SCADA and DCS systems, MES and ERP systems, and IT and OT systems.

A third embodiment of the disclosure is a method of optimizing system configurations between a plurality of assets controlled by a plurality of systems, the method comprising the steps of: collecting system data from the plurality of systems for the plurality of assets controlled by each system into a comparison system, wherein the collected system data includes at least one of a description of an asset, an element type, and an asset naming convention; identifying relationships between the collected system data for the plurality of assets to provide enriched system data; generating a graph for each of the plurality of assets from said enriched system data, wherein each graph defines a vertex signature; creating a compatibility matrix using the vertex signatures, wherein the compatibility matrix provides similarity values for each of the plurality of assets based on the enriched system data; and evaluating the compatibility matrix to determine validity of the similarity values of the compatibility matrix. An embodiment of the disclosure is one, any or all of prior embodiments in this paragraph up through the third embodiment in this paragraph, wherein the similarity values range from 0 to 1, in which the similarity identifier generates a similarity value of 0 for a comparison of assets in which the enriched system data contains a dissimilar data set, and the similarity identifier generates a non-zero similarity value for a comparison of assets in which the enriched system data indicates vector similarities. An embodiment of the disclosure is one, any or all of prior embodiments in this paragraph up through the third embodiment in this paragraph, wherein the comparison system provides a user with a specific pair of overlapping assets via a selection mechanism configured to provide a highest similarity value as calculated by the similarity identifier. An embodiment of the disclosure is one, any or all of prior embodiments in this paragraph up through the third embodiment in this paragraph, wherein the plurality of assets may include physical equipment controlled by PLCs and RTUs, SCADA and DCS systems, MES and ERP systems, and IT and OT systems.

Without further elaboration, it is believed that using the preceding description that one skilled in the art can utilize the present disclosure to its fullest extent and easily ascertain the essential characteristics of this disclosure, without departing from the spirit and scope thereof, to make various changes and modifications of the disclosure and to adapt it to various usages and conditions. The preceding preferred specific embodiments are, therefore, to be construed as merely illustrative, and not limiting the remainder of the disclosure in any way whatsoever, and that it is intended to cover various modifications and equivalent arrangements included within the scope of the appended claims.

In the foregoing, all temperatures are set forth in degrees Celsius and, all parts and percentages are by weight, unless otherwise indicated.

## Claims

1. A method of optimizing characteristics of a plurality of assets controlled by a plurality of systems, the method comprising the steps of:
collecting system data from each of the plurality of systems representing the plurality of assets into a comparison system;
identifying relationships between the collected system data for the plurality of assets, wherein the collected data is recursively analyzed, by the comparison system, for each individual asset of the plurality of assets;
generating a graph for each of the plurality of assets, wherein each graph defines a vertex signature for each of the plurality of assets; and
creating a compatibility matrix using the vertex signature for each of the plurality of assets, wherein the compatibility matrix provides values for vector similarities between the characteristics of each of the plurality of assets.

2. The method of claim 1, wherein each graph is defined by the relationships of the plurality of assets and one or more subgraphs for each individual asset.

3. The method of claim 2, wherein the values for vector similarities, calculated by a similarity identifier, range from 0 to 1,
wherein the values calculated by the similarity identifier are based on the collected system data, with the collected system data being representative of an asset characteristic including at least one of a description of an asset, an element type, and an asset naming convention.

4. The method of claim 3, wherein the similarity identifier generates a value of 0 for a comparison of assets in which the collected system data contains a dissimilar data set.

5. The method of claim 4, wherein the similarity identifier generates a non-zero value for a comparison of assets in which the collected system data indicates vector similarities.

6. The method of claim 1, the method also comprising steps of:
evaluating the comparison report, wherein a user selects a specific pair of overlapping assets to determine validity of the values for vector similarities used in the compatibility matrix; and
producing a comparison report from the compatibility matrix, wherein the comparison report visually indicates pairs of overlapping assets as determined by the values of the compatibility matrix.

7. The method of claim 6, wherein a selection mechanism in the comparison system provides the user with the specific pair of overlapping assets, wherein the selection mechanism is configured to provide a highest similarity value as calculated by the compare engine.

8. The method of claim 1, wherein a traversal depth *n* of each graph is either pre-determined by a user or by a highest possible number of traversals.

9. The method of claim 1, wherein the plurality of assets include physical equipment, controlled by PLCs and RTUs, SCADA and DCS systems, MES and ERP systems, and IT and OT systems.

10. The method of claim 1, wherein the system data collected by a data ingestion service is stored in a raw data store within a data collector.

11. A method of scoring system data for a plurality of assets controlled by a plurality of systems, the method comprising the steps of:
collecting system data from each of the plurality of systems pertaining to the plurality of assets;
enriching the collected system data to provide enriched system data including at least one of a description of an asset, an element type, and an asset naming convention;
building a plurality of vertex signatures, wherein the plurality of vertex signatures are derived from relationships plotted from the enriched system data;
concatenating the plurality of vertex signatures for the plurality of assets into a compatibility matrix; and
scoring the compatibility matrix for the plurality of assets.

12. The method of claim 11, wherein a similarity identifier generates a plurality of similarity values based on the enriched system data, with the similarity values ranging from 0 to 1.

13. The method of claim 12, wherein the similarity identifier generates a similarity value of 0 for a comparison of assets where the enriched system data contains a dissimilar data set, and wherein the similarity identifier generates a non-zero similarity value for a comparison of assets where the enriched system data indicates vector similarities.

14. The method of claim 13, the method further comprising a step of evaluating the compatibility matrix, wherein a user selects a specific pair of overlapping assets from the compatibility matrix to determine validity of the similarity values.

15. A method of optimizing system configurations between a plurality of assets controlled by a plurality of systems, the method comprising the steps of:
collecting system data from the plurality of systems for the plurality of assets controlled by each system into a comparison system, wherein the collected system data includes at least one of a description of an asset, an element type, and an asset naming convention;
identifying relationships between the collected system data for the plurality of assets to provide enriched system data;
generating a graph for each of the plurality of assets from said enriched system data, wherein each graph defines a vertex signature;
creating a compatibility matrix using the vertex signatures, wherein the compatibility matrix provides similarity values for each of the plurality of assets based on the enriched system data; and
evaluating the compatibility matrix to determine validity of the similarity values of the compatibility matrix.
